# EUROPEAN PATENT APPLICATION

(11) **EP 4 844 792 A1**
(43) Date of publication of application: **25.11.2026**
(21) Application number: 26177006.9
(22) Date of filing: 06.05.2026
(51) Int. Cl.: H01H 1/58, H01H 13/04, H01H 21/04, H01H 21/28, H01R 4/48, H01R 9/24, H02G 3/12, H02G 3/14

(54) **ELECTRICAL SWITCH WITH LEVER MECHANISM FOR CONDUCTOR CONNECTION AND DISCONNECTION**

(30) Priority: 19.05.2025 BE 202505315
(71) Applicant: Niko, 9100 Sint-Niklaas (BE)
(72) Inventor: VANHECK, Serge, 9100 Sint-Niklaas (BE)
(74) Representative: Calysta NV

(57) **Abstract**

An electrical switch (101) comprises a housing with connection terminals (303) for flexible and/or rigid conductors (302, 503), a switching mechanism (103, 104), and front-accessible lever mechanisms (105-108) configured to selectively open (205) or close (201-204) the terminals (303) to enable tool-free insertion or removal of conductors and automatic securing of rigid conductors, thereby improving installation efficiency and wiring accessibility.

## Description

### Technical Field

The present invention relates to electrical connection devices, and more particularly to an electrical switch featuring connection terminals operable through a manually actuated lever mechanism.

### Prior art

Conventional electrical switches often employ push-in type connection terminals to secure conductors, particularly rigid wires. Such push-in mechanisms can be difficult to use with flexible conductors, often requiring additional tools or techniques to establish a secure connection or to remove conductors without causing damage.

EP491319B1 describes a flush-mounted electrical apparatus that comprises means for connecting electrical conductors via terminal elements located within a housing. The apparatus allows conductors to be introduced into contact terminals via access points provided at the rear or side of the housing. The design emphasizes flush mounting compatibility and aims to facilitates the electrical wiring process within a constrained installation space.

EP2936634B1 discloses an electrical equipment module designed for simplified installation into such support frames. The device includes one or more conductor access points at the front of the module, allowing conductors to be inserted through apertures and guided into internal terminal blocks. The module is designed to facilitate easier wiring access from the front face, supporting certain installation workflows where rear access is limited.

In WO2021122051A1, the rear part of the housing carries the mounting means for the electrical apparatus mechanism, while access to the connection terminals is arranged to facilitate electrical connection during installation. Although such systems improve the accessibility of the connection terminals compared to previous designs, the terminals disclosed in WO2021122051A1 are primarily intended for push-in engagement of conductors and do not provide a selective manual release or actuation mechanism operable from the front. Furthermore, there is no provision for manually switching a connection terminal between an open state and a closed state during installation or removal of conductors, which can limit flexibility, particularly when working with flexible or stranded electrical wires.

In the prior art, electrical switches often rely on push-in or screw-based terminal systems for connecting conductors. While such terminals can provide secure electrical contact, they present significant limitations during installation and maintenance, particularly in confined or inaccessible mounting environments such as flush-mounted wall boxes. Specifically, the insertion and removal of electrical conductors-especially flexible or stranded wires-can be difficult, inefficient, and error-prone. Flexible wires tend to bend or deform during insertion, increasing the risk of poor contact or incomplete engagement. Furthermore, disconnection often requires the use of specialized tools or access to the rear of the device, complicating installation procedures and introducing a risk of conductor damage, accidental loosening, or unsafe terminations. These challenges can lead to longer installation times, higher failure rates, and reduced safety and reliability, particularly in high-density or retrofit applications.

There remains a need for an electrical switch that provides easy insertion and removal of both flexible and rigid electrical conductors, offering a simple and reliable mechanism that allows for manual operation, facilitates the secure retention of conductors, and improves overall installation efficiency.

### Brief summary of the invention

It is an object of the present invention to provide an electrical switch that facilitates the efficient, safe, and reliable connection and disconnection of both flexible and rigid electrical conductors, particularly in compact or constrained installation environments.

More specifically, the invention aims to enable manual, front-accessible control over the state of each connection terminal, thereby overcoming the limitations of traditional push-in or tool-dependent wiring systems. The invention further seeks to improve installer ergonomics, reduce the likelihood of wiring errors or conductor damage, and support a broad range of conductor types without compromising ease of use or connection integrity.

According to the invention, this object is solved by the electrical switch according to the first claim comprising:
- a housing having a set of connection terminals configured to receive one or more flexible and/or rigid electrical conductors upon insertion;
- a switching mechanism configured to selectively establish or interrupt an electrical connection between two of the connection terminals in response to operation of the mechanism;
CHARACTERIZED IN THAT it further comprises
- a lever mechanism manually operable from the front of the housing, associated with a respective connection terminal, and configured to selectively switch said associated connection terminal between an open position and a closed position;
- wherein actuation of the lever mechanism into the open position facilitates the insertion or removal of the one or more conductors; and
- wherein actuation of the lever mechanism into the closed position secures the one or more conductors inserted into the connection terminal.

As will be explained into detail, the present invention addresses the limitations of conventional electrical switch terminals by providing an electrical switch with a manually operable lever mechanism, accessible from the front of the housing, which allows each connection terminal to be selectively switched between an open position and a closed position. In the open position, the terminal facilitates easy and tool-free insertion or removal of one or more electrical conductors, including flexible or stranded wires that are often difficult to install using push-in-only systems. In the closed position, the terminal securely retains the inserted conductors, ensuring a reliable and durable electrical connection.

The invention thus enables safe, efficient wiring in tight or inaccessible mounting environments, such as flush-mounted electrical boxes, by allowing direct manual access to terminal control from the front of the device. This eliminates the need for rear access or auxiliary tools, reduces installation errors, and improves both installer ergonomics and connection reliability. In some embodiments, the lever mechanism may include mechanical enhancements such as cams, spring-loaded contacts, locking features, or protective covers, further improving usability and environmental resistance. The invention is therefore well-suited for modern electrical installations requiring speed, flexibility, and safety in conductor management.

With reference to the first claim, the electrical switch comprises a housing which supports a set of connection terminals. These terminals are configured to receive one or more electrical conductors, including both flexible (e.g., stranded) and rigid (e.g., solid core) types, upon insertion. The housing may be adapted for mounting within a wall-mounted electrical box, a modular enclosure, or a panel-type assembly.

A switching mechanism is provided within the housing and is configured to selectively establish or interrupt an electrical connection between two or more of the connection terminals. The switching mechanism is controlled by an actuator such as a toggle, push-button, rotary knob, or rocker switch disposed on the front surface of the housing. In other words, the switching mechanism corresponds to mechanisms known in the art for establishing or interrupting electrical connections in standard switch devices.

Note that electrical switches can be categorized by their function, specifically in how they control the flow of electricity within one or more circuits. The simplest type is the Single-Pole Single-Throw (SPST) switch, which operates as a basic on/off control for a single circuit. A Single-Pole Double-Throw (SPDT) switch connects a single input to one of two outputs, allowing the user to toggle between two circuit paths - often used in changeover or selector applications. Double-Pole Single-Throw (DPST) switches control two separate circuits simultaneously with a single actuator, commonly found in applications where both phase and neutral must be switched together. The Double-Pole Double-Throw (DPDT) switch goes a step further by enabling two circuits to be independently routed to two different outputs, making it ideal for reversing polarity or switching between power sources. These functional classifications form the foundation for a wide variety of electrical switching applications, from domestic lighting to complex industrial controls.

The manner in which the switching mechanism is associated with two or more connection terminals depends on the specific function of the electrical switch. In a Single-Pole Single-Throw (SPST) configuration, the switching mechanism typically connects or disconnects a single pair of terminals, functioning as a simple on/off control. In contrast, a Single-Pole Double-Throw (SPDT) switch involves a switching mechanism that toggles between two alternative output terminals, routing the input conductor to one of two circuit paths. For Double-Pole variants, such as DPST or DPDT, the mechanism is configured to operate in tandem across two sets of terminals, enabling the simultaneous control of multiple circuits or directions of current flow. Accordingly, the internal structure and actuation of the switching mechanism are adapted to the intended switching logic-whether it involves opening and closing a single connection or dynamically rerouting electrical flow across multiple paths-ensuring that the physical terminal associations reflect the functional role of the switch.

In a distinguishing feature of the invention, each connection terminal may be associated with a manually operable lever mechanism accessible from the front of the housing. The lever mechanism is configured to selectively switch the corresponding connection terminal between an open position and a closed position.

In the open position, the terminal is accessible for the insertion or removal of electrical conductors. In the closed position, the terminal securely retains the inserted conductors, establishing reliable electrical contact.

The invention addresses long-standing challenges in electrical switch installation by providing a front-accessible, manually operable lever mechanism associated with potentially each connection terminal. This allows the terminal to be selectively opened for conductor insertion or removal and securely closed to retain the conductor, all without requiring tools or rear access. It significantly improves usability in confined spaces, such as flush-mounted wall boxes, and enhances safety by reducing the risk of incomplete connections or wire damage.

A key advantage of the invention is its ability to accommodate both flexible (stranded) and rigid (solid-core) electrical conductors, offering a dual-mode terminal functionality that simplifies installation across different wiring types. Flexible conductors, which are often difficult to insert into conventional push-in terminals due to their lack of stiffness, can be reliably inserted while the terminal is held open using the front-operable lever. Once positioned, the conductor is securely clamped by actuating the lever into the closed position, reducing the risk of misalignment, poor contact, or damage. In contrast, rigid conductors may be directly inserted and automatically retained by a spring-loaded contact, without requiring lever actuation. This design not only enhances installation efficiency but also improves reliability and user safety through clear mechanical feedback, optional locking features, spring biasing, and the possibility of protective covers, making the switch robust and suitable for both residential and industrial applications.

Other embodiments according to the present invention are mentioned in the appended claims and the subsequent description of an embodiment of the invention.

According to an embodiment, the connection terminal associated with a lever mechanism further comprises a securing mechanism configured to automatically secure a rigid electrical conductor upon insertion without requiring actuation of the lever mechanism.

The connection terminal design offers enhanced flexibility by incorporating a securing mechanism configured to automatically retain a rigid electrical conductor upon insertion, without requiring actuation of the associated lever mechanism. The securing mechanism comprises for example a spring-loaded contact configured to automatically engage the inserted conductor in the closed position. This feature allows solid-core (rigid) conductors to be quickly and reliably connected through a simple push-in action, streamlining the installation process and minimizing the number of steps required for secure termination. By decoupling the actuation of the lever from the retention of rigid wires, the terminal supports tool-free, single-motion insertion for standard building wires, improving installation speed and reducing installer fatigue. At the same time, the manual lever remains available for controlled insertion or removal of flexible or stranded conductors, ensuring full compatibility across wiring types. This dual-mode functionality provides significant ergonomic and functional advantages over traditional terminal blocks, particularly in high-volume or time-sensitive installations.

According to an embodiment, the lever mechanism comprises a cam or wedge element configured to mechanically displace a retaining member of the connection terminal. This enables the terminal to transition between its open and closed states in response to actuation of the lever.

In certain embodiments, the lever mechanism further comprises a locking feature configured to secure the lever mechanism in the open position during conductor insertion or removal. This configuration allows the terminal to remain accessible without requiring the installer to hold the lever manually, thereby enabling hands-free wiring operations. The key advantage of this feature is that it improves installation efficiency and safety, particularly when working with flexible or stranded wires that require more time and precision to position. By preventing accidental closure of the terminal during wiring, the locking feature also reduces the risk of conductor damage or incomplete insertion, ensuring a more reliable and user-friendly connection process.

According to an embodiment, the housing further comprises an aperture at the front through which the lever mechanism is accessible. Access to the lever mechanism is provided through an aperture located at the front of the housing. The lever mechanism may include a handle portion that extends through an aperture in the front surface of the housing, providing direct manual access for users. In some embodiments, the front portion of the housing may include a protective cover or shield that at least partially encloses the lever mechanism to prevent accidental actuation, contamination, or damage.

According to an embodiment, the lever mechanism maintains the associated connection terminal in the closed position until manually released. This ensures that once a conductor has been inserted and the lever actuated, the terminal remains securely closed, preventing unintended loosening or disconnection of the conductor due to vibration, handling, or environmental factors. The advantage of this design lies in its ability to provide a stable, secure, and tamper-resistant connection. It also enhances user confidence during installation and maintenance, as the terminal's state remains reliably fixed until deliberately changed.

According to an embodiment, the lever mechanism is biased towards the closed position by a resilient member. This means that when the lever is not actively held in the open position, it automatically returns to the closed state, ensuring that the terminal re-engages to securely retain the inserted conductor. The advantage of this feature is that it provides an added layer of safety and reliability by minimizing the risk of terminals unintentionally remaining open after installation.

According to an embodiment, the housing comprises a cover element positioned at the front of the housing and configured to function as an actuator for the switching mechanism. It functions as a conventional cover for the switching mechanism providing protection for the internal components and helps prevent accidental contact or contamination.

According to an embodiment, the housing further comprises mounting features adapted for installation within a wall-mounted electrical box.

This feature ensures that the electrical switch is mechanically compatible with standard in-wall electrical enclosures used in residential, commercial, or industrial installations. By integrating mounting features-such as screw holes, clips, or bracket guides-directly into the housing, the switch can be quickly and reliably fixed into position without the need for additional adapters or mounting hardware. This simplifies installation, reduces the risk of misalignment, and ensures compliance with common electrical standards. It also enhances the product's market compatibility, making it suitable for a wide range of electrical infrastructure systems.

### Brief description of the Drawings

Figure 1 is a front view of the electrical switch according to an embodiment of the invention highlighting its overall construction;
Figure 2(a) and 2(b) is a side view illustrating the internal configuration of the lever mechanism in greater detail;
Figure 3 is a back view of the electrical switch according to an embodiment of the invention, illustrating a conductor positioned for insertion into a terminal of the switch;
Figure 4(a) shows the location of section line A-A, and Figure 4(b) illustrates a cross-sectional view of the electrical switch taken along that line; and
Figure Figure 5(a) shows the location of section line B-B, and Figure 5(b) and 5(c) illustrates a cross-sectional view of the electrical switch taken along that line without and with a conductor inserted into the terminal.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

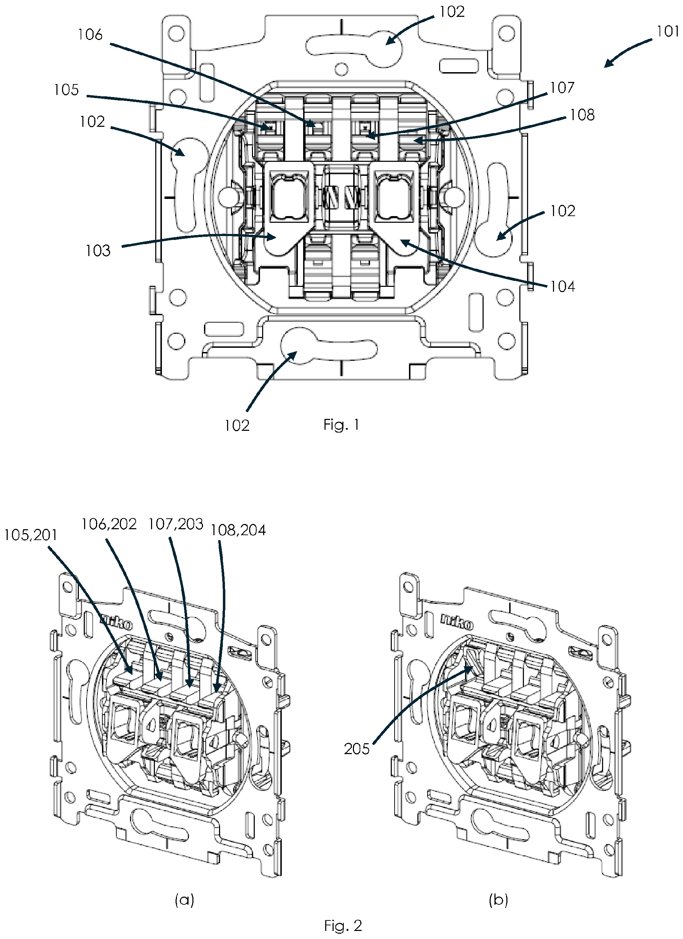

Referring to Figure 1, the electrical switch 101 is shown in a front view, illustrating its overall construction according to an embodiment of the invention. The switch comprises a housing that integrates a switching mechanism 103, 104, a series of manually operable lever mechanisms 105-108 each associated with a respective connection terminal, and mounting features 102 arranged to facilitate installation within a standard wall-mounted electrical box or similar enclosure. The design enables complete front access to both the switching and wiring interfaces, significantly improving usability in compact or recessed installation environments, such as flush-mounted wall cavities.

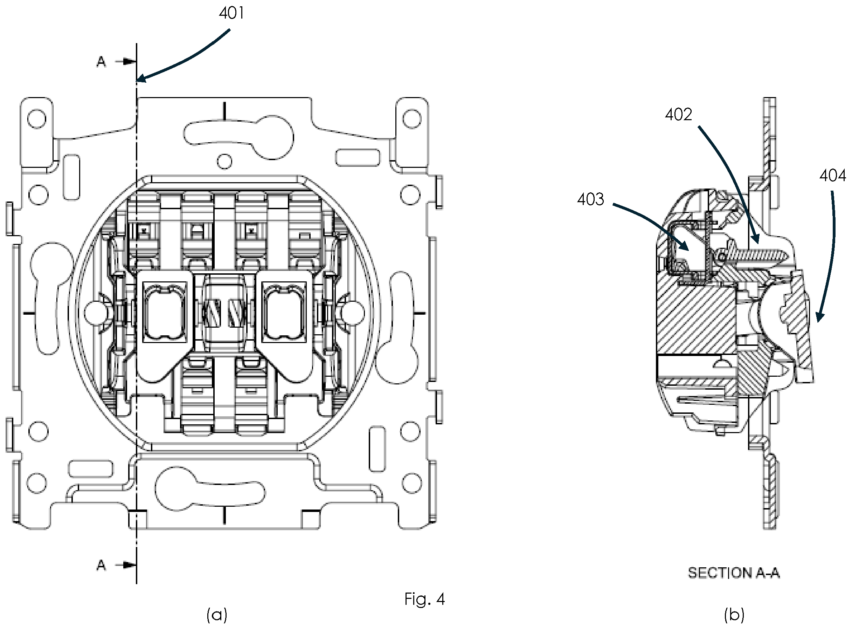

Figures 2(a) and 2(b) provide side views of the switch and detail the internal configuration of the lever mechanism. In Figure 2(a), the lever mechanism is shown in a closed position 201-204, where the cam element 402 as illustrated in Figure 4 engages a retaining member to firmly clamp an inserted conductor, ensuring both mechanical stability and reliable electrical contact. In Figure 2(b), the lever mechanism is depicted in an open position 205, in which a space 403 - again illustrated in Figure 4 - is formed within the terminal to allow insertion or removal of a conductor. Notably, the lever is accessible and operable directly from the front face of the switch, allowing the installer or user to control the terminal state manually-without tools or access to the rear or sides of the device. This configuration not only simplifies wiring but also enhances safety and installation speed, particularly in confined spaces.

The ability to manipulate each terminal via the front-facing lever mechanism provides a critical advantage: it enables the user to manually control the fixation of both rigid (solid-core) and flexible (stranded) conductors, depending on wiring needs. Rigid conductors may be inserted directly into the terminal and retained automatically by an internal spring mechanism, while flexible conductors-which often require more careful alignment-can be inserted while the lever is manually held in the open position. Once positioned, actuation of the lever securely closes the terminal, completing both the mechanical and electrical connection. This dual-mode terminal control, accessible entirely from the front, enhances the adaptability of the switch for various conductor types and greatly improves the ergonomics of the installation process.

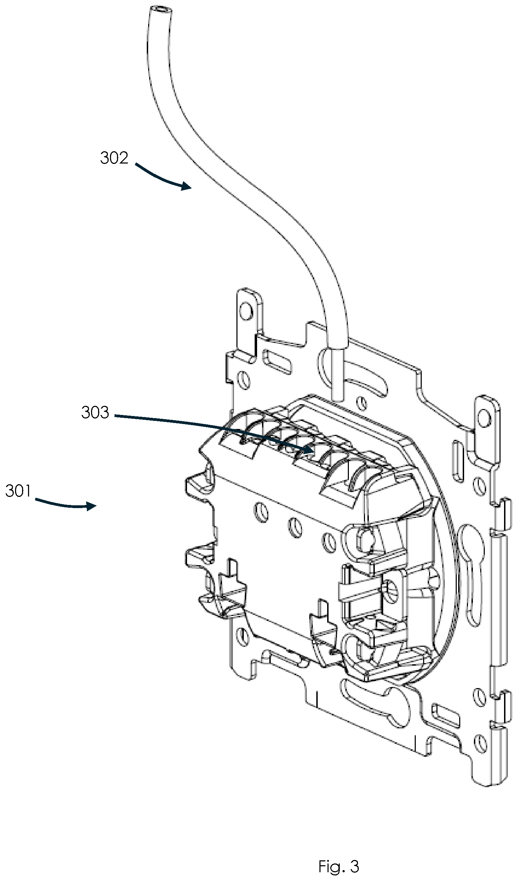

Figure 3 provides a rear view of the switch 301, where a conductor 302 is shown aligned with a terminal 303 for insertion. This figure demonstrates the physical relationship between conductor and terminal and further illustrates the ease with which conductors can be guided into position. The embodiment supports a push-in engagement for rigid conductors and a manual open/close procedure via the lever for flexible conductors, ensuring reliable wire termination in both cases.

Figure 4(a) indicates the location of section line A-A 401, and Figure 4(b) provides the corresponding cross-sectional view, showing the internal components in greater detail. The front cover element 404, which also acts as an actuator for the switching mechanism 103, 104, is visible, along with the cam structure 402 and the conductor insertion space 403. The arrangement demonstrates the compact integration of the switching interface and the terminal control system within the housing, enabling both operations to be performed intuitively and efficiently from the same access point.

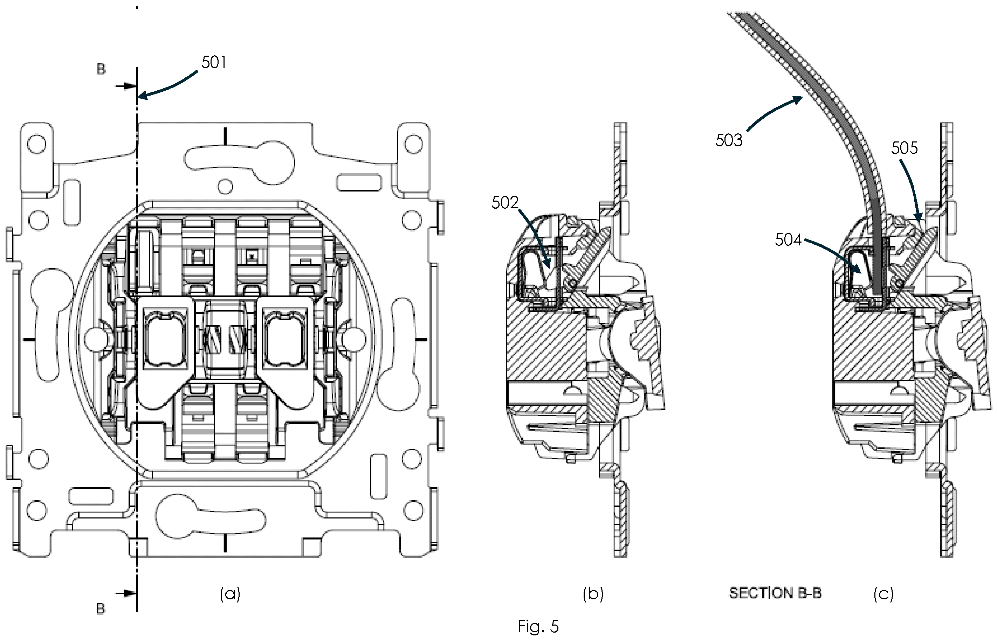

Figure 5(a) marks section line B-B 501, which serves as the reference for the cross-sectional views in Figures 5(b) and 5(c). In Figure 5(b), the terminal is shown in its open state, with an unobstructed space 502 available for conductor insertion. No conductor is yet present. In Figure 5(c), a conductor 503 has been inserted into the space 504, and the lever 505 is shown in its closed position, securing the conductor. These figures highlight the user-controlled engagement process and emphasize the switch's versatility in accommodating different wire types without requiring modifications or specialized tools.

Across all figures, the invention demonstrates a compact, user-friendly, and installation-efficient switch design that unifies reliable electrical switching with secure, front-operated terminal control. The lever mechanism provides the installer or user with full manual control over the insertion and retention of both rigid and flexible conductors, all from the accessible front face of the device. This feature eliminates the need to handle the device from the rear or side and avoids the common frustrations of traditional push-in-only terminals, especially in tight spaces. Optional enhancements such as lever locking in the open position, spring biasing toward closure, and cam-driven displacement of internal components further optimize the system for safety, ease of use, and robust mechanical performance. As such, the invention is ideally suited for modern residential, commercial, and industrial applications that demand flexible, safe, and efficient wiring solutions.

It should be understood that the present invention is not limited to the described embodiments and that variations can be applied without going outside of the scope of the claims.

## Claims

1. An electrical switch (101) comprising:
- a housing having a set of connection terminals (303) configured to receive one or more flexible and/or rigid electrical conductors (302, 503) upon insertion;
- a switching mechanism (103, 104) configured to selectively establish or interrupt an electrical connection between two or more of the connection terminals (303) in response to operation of the mechanism;
**CHARACTERIZED IN THAT** it further comprises
- a lever mechanism (105-108) manually operable from the front of the housing, associated with a respective connection terminal (303), and configured to selectively switch said associated connection terminal between an open position (205) and a closed position (201-204);
- wherein actuation of the lever mechanism (105-108) into the open position (205) facilitates the insertion or removal of the one or more conductors (302, 503); and
- wherein actuation of the lever mechanism into the closed position (201-204) secures the one or more conductors (302; 503) inserted into the connection terminal (303).

2. The electrical switch according to claim 1, wherein the connection terminal (303) associated with a lever mechanism (105-108) further comprises a securing mechanism configured to automatically secure a rigid electrical conductor (302) upon insertion without requiring actuation of the lever mechanism.

3. The electrical switch according to claim 2, wherein the securing mechanism comprises a spring-loaded contact configured to automatically engage the inserted conductor (302) in the closed position (201-204).

4. The electrical switch according to any of the preceding claims, wherein the lever mechanism (105-108) comprises a cam or wedge element (402) configured to mechanically displace a retaining member of the connection terminal (303).

5. The electrical switch according to any of the preceding claims, wherein the lever mechanism (105-108) further comprises a locking feature configured to secure the lever mechanism in the open position (205) during conductor insertion or removal.

6. The electrical switch according to any of the preceding claims, wherein the housing further comprises an aperture at the front through which the lever mechanism (105-108) is accessible.

7. The electrical switch according to claim 6, wherein the lever mechanism (105-108) comprises a handle portion extending through the aperture at the front of the housing.

8. The electrical switch according to any of the preceding claims, wherein the lever mechanism (105-108) maintains the associated connection terminal (303) in the closed position (201-204) until manually released.

9. The electrical switch according to any of the preceding claims, wherein the lever mechanism (105-108) is biased towards the closed position by a resilient member.

10. The electrical switch according to any of the preceding claims, wherein the housing comprises a cover element (404) positioned at the front of the housing and configured to function as an actuator for the switching mechanism (103, 104).

11. The electrical switch according to any of the preceding claims, wherein the housing further comprises mounting features (102) adapted for installation within a wall-mounted electrical box.
